# EUROPEAN PATENT APPLICATION

(11) **EP 4 502 530 A1**
(43) Date of publication of application: **05.02.2025**
(21) Application number: 22933625.0
(22) Date of filing: 21.11.2022
(51) Int. Cl.: G01B 11/00, B65G 1/137, G06T 7/80, H04N 23/60

(54) **INFORMATION PROCESSING DEVICE, LOAD DETECTION SYSTEM, AND CALIBRATION METHOD**

(30) Priority: 25.03.2022 JP 2022050417
(71) Applicant: Panasonic Intellectual Property Management Co., Ltd., Osaka-shi, Osaka 540-6207 (JP)
(72) Inventor: IDERA Takaaki, Osaka 571-0057 (JP); MORIYAMA Takaaki, Osaka 571-0057 (JP); TANAKA Koshi, Osaka 571-0057 (JP); YAMAGUCHI Toshiki, Osaka 571-0057 (JP); KATO Keita, Osaka 571-0057 (JP)
(74) Representative: Eisenführ Speiser
(86) International application number: PCT/JP2022/043080
(87) International publication number: WO 2023/181495

(57) **Abstract**

In the present invention, calibration of a parcel detection system is made efficient. This information processing device acquires, from an imaging camera, a captured image obtained by imaging a board having a plurality of marks, acquires, from an infrared camera, an infrared image obtained by imaging the board, detects marks from the captured image, calculates a first index regarding calibration of the captured image on the basis of the number of detected marks, detects marks from the infrared image, calculates a second index regarding calibration of the infrared image on the basis of the number of detected marks, and outputs information indicating the first and second indexes.

## Description

### TECHNICAL FIELD

The present disclosure relates to an information processing device, a parcel detection system, and a calibration method.

### BACKGROUND ART

With an increase in economic activity in recent years, the volume of parcels being distributed has been increasing. In the distribution process of parcels, sorting work for sorting parcels by destination is a time-consuming process that has been done manually in the related art, but a technique for automating at least a part of sorting work has been proposed.

Patent Literature 1 discloses a system in which a parcel moving on a transport path is tracked, an image to be displayed is determined based on information related to the parcel read from the parcel and information on a position of the parcel, and the image is projected onto the parcel from a projector to display the image on the parcel.

### CITATION LIST

### PATENT LITERATURE

Patent Literature 1: US7090134B

### SUMMARY OF INVENTION

### TECHNICAL PROBLEM

Calibration of each sensor is performed when the system is installed so that an image can be appropriately projected from the projector to the parcel. Improvement in calibration efficiency is required.

The present disclosure has been proposed in view of the above-mentioned circumstances in the related art, and relates to a technique for efficient calibration of a parcel detection system. In particular, an object of the present disclosure is to provide an information processing device, a parcel detection system, and a calibration method.

### SOLUTION TO PROBLEM

An information processing device according to an aspect of the present disclosure is an information processing device that performs calibration related to a position of an imaging camera that captures a captured image used for detection of a parcel being transported and a position of an infrared camera that captures an infrared image used for detection of the parcel, the information processing device including a processor and a memory. The processor is configured to: acquire, from the imaging camera, the captured image obtained by imaging a board having a plurality of marks; acquire, from the infrared camera, the infrared image obtained by imaging the board; detect the marks from the captured image, and calculate a first index related to calibration of the captured image based on the number of the detected marks; detect the marks from the infrared image, and calculate a second index related to calibration of the infrared image based on the number of the detected marks; and output information indicating the first index and the second index.

A parcel detection system according to an aspect of the present disclosure includes: a projection device configured to project a projection image onto a parcel being transported; an imaging camera configured to capture a captured image used for detecting the parcel; an infrared camera configured to capture an infrared image used for detecting the parcel; and an information processing device configured to control the projection device, the imaging camera, and the infrared camera. In calibration related to a position of the imaging camera and a position of the infrared camera, the information processing device is configured to: acquire, from the imaging camera, the captured image obtained by imaging a board having a plurality of marks; acquire, from the infrared camera, the infrared image obtained by imaging the board; detect the marks from the captured image, and calculate a first index related to calibration of the captured image based on the number of the detected marks; detect the marks from the infrared image, and calculate a second index related to calibration of the infrared image based on the number of the detected marks; and output information indicating the first index and the second index.

In a calibration method according to an aspect of the present disclosure, an information processing device performs calibration related to a position of an imaging camera that captures a captured image used for detection of a parcel being transported and a position of an infrared camera that captures an infrared image used for detection of the parcel. The calibration method includes: placing a board having a plurality of marks by an installation worker; acquiring, from the imaging camera, the captured image obtained by imaging the board; acquiring, from the infrared camera, the infrared image obtained by imaging the board; detecting the marks from the captured image, and calculating a first index related to calibration of the captured image based on the number of the detected marks; detecting the marks from the infrared image, and calculating a second index related to calibration of the infrared image based on the number of the detected marks; and displaying information indicating the first index and the second index.

Any combination of the above components, and conversion of an expression of the present disclosure between a method, a device, a system, a storage medium, a computer program, and the like are also effective in an aspect of the present disclosure.

### ADVANTAGEOUS EFFECTS OF INVENTION

According to the present disclosure, it is possible to efficiently perform calibration in a parcel sorting system.

### BRIEF DESCRIPTION OF DRAWINGS

[Fig. 1] Fig. 1 is a block diagram showing a configuration example of a parcel sorting system according to Embodiment 1.
[Fig. 2] Fig. 2 is a block diagram showing a configuration example of an information processing device according to Embodiment 1.
[Fig. 3] Fig. 3 is a schematic diagram illustrating parcel transportation according to Embodiment 1.
[Fig. 4] Fig. 4 is a schematic diagram illustrating parcel detection and projection according to Embodiment 1.
[Fig. 5] Fig. 5 is a processing sequence of the parcel sorting system according to Embodiment 1.
[Fig. 6] Fig. 6 is a processing sequence of the parcel sorting system according to Embodiment 1.
[Fig. 7] Fig. 7 is a schematic diagram illustrating recognition of a parcel being transported according to Embodiment 1.
[Fig. 8] Fig. 8 is a schematic diagram illustrating calibration of an imaging camera and an infrared camera according to Embodiment 1.
[Fig. 9] Fig. 9 is a flowchart showing a calibration work procedure according to Embodiment 1.
[Fig. 10] Fig. 10 is a diagram showing an index image related to calibration according to Embodiment 1.

### DESCRIPTION OF EMBODIMENTS

Hereinafter, an embodiment specifically disclosing a parcel detection system, a parcel detection method, an information processing device, and control method therefor according to the present disclosure will be described in detail with reference to the drawings as appropriate. However, unnecessarily detailed description may be omitted. For example, the detailed description of well-known matters or the redundant description of substantially the same configuration may be omitted. This is to avoid unnecessary redundancy of the following description and facilitate understanding of those skilled in the art. The accompanying drawings and the following description are provided for those skilled in the art to fully understand the present disclosure, and are not intended to limit the subject matters described in the claims.

### <Embodiment 1>

### (System Configuration)

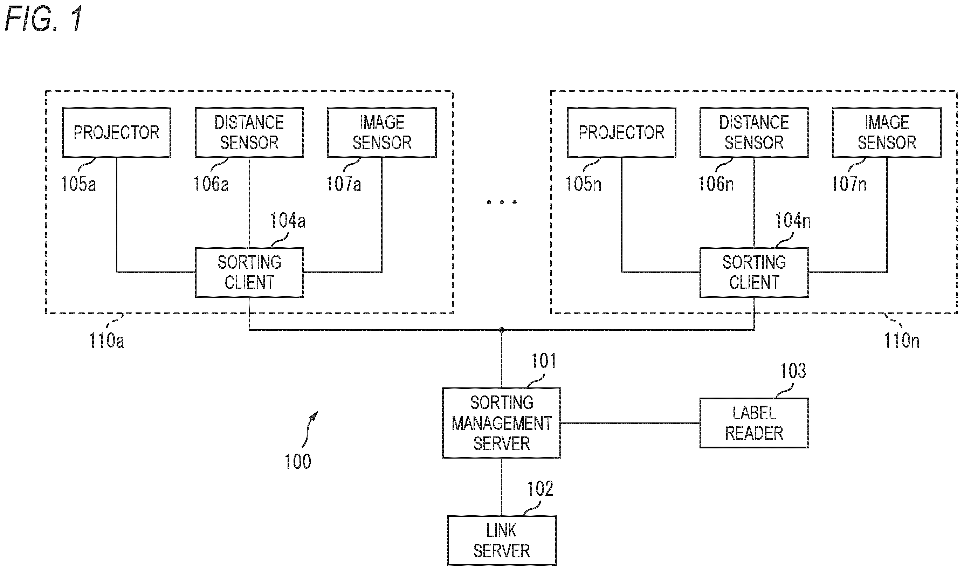

Fig. 1 is a block diagram showing a configuration example of a parcel sorting system 100 according to the embodiment. The parcel sorting system 100 is a system that supports work of a worker who sorts a plurality of parcels transported by a transport conveyor (not shown in Fig. 1), and also operates as a parcel detection system. The parcel sorting system 100 is installed in a logistics center owned by, for example, a retailer, a wholesaler, or an Internet distributor. The parcels to be sorted generally have a substantially rectangular parallelepiped shape, but the outer shape and size thereof are not particularly limited, and the type of the parcels is also not particularly limited. The transport conveyor for transporting the parcel may be, for example, a belt conveyor or a roller conveyor. A transport path of the parcel may be formed by combining a plurality of transport conveyors, so that a transport direction may change or a part of the transport path may branch off.

The parcel sorting system 100 includes a sorting management server 101, a link server 102, a label reader 103, a sorting client 104, a projector 105, a distance sensor 106, and an image sensor 107. The sorting client 104, the projector 105, the distance sensor 106, and the image sensor 107 are grouped together as one client system 110. A plurality of client systems 110 are provided corresponding to a plurality of sorting areas provided on a transport conveyor that transports parcels. Accordingly, a plurality of sorting clients 104, a plurality of projectors 105, a plurality of distance sensors 106, and a plurality of image sensors 107 are installed according to the number of sorting areas. In the following description, when it is necessary to describe the devices individually, suffixes (a, b, ...) are added, and when the devices are described collectively, the suffixes are omitted.

The sorting management server 101 is an information processing device that controls the entire parcel sorting system 100 according to the present embodiment. The sorting management server 101 acquires a detection result of the label reader 103 and acquires various pieces of parcel information from the link server 102. In addition, the sorting management server 101 issues various instructions to and collects various information from one or more sorting clients 104. Further, the sorting management server 101 may perform operation control of a transport conveyor described later, and collect and manage operation information.

The link server 102 stores and manages label information and parcel information in association with each other. The link server 102 provides parcel information corresponding to label information read by the label reader 103 in response to a request from the sorting management server 101. In the example of Fig. 1, one sorting management server 101 and one link server 102 are shown, but the sorting management server 101 and the link server 102 may include a plurality of devices from the viewpoint of function redundancy, parcel balancing, and the like. The sorting management server 101 may manage the label information and a sorting pattern in association with each other, and perform a process related to the sorting of each parcel, which will be described later, based on this. In such a case, the configuration of the link server 102 may be omitted, and the sorting management server 101 may perform the process related to the sorting of each parcel, which will be described later, based on the pattern of the acquired label information.

The label reader 103 is a device for reading a label attached to a parcel being transported by the transport conveyor, and includes optical components such as a lens and an image sensor. By reading the label attached to the parcel, various information indicated by the label (hereinafter referred to as "label information") is acquired. The form or method of the label is not particularly limited, and for example, a barcode or a two-dimensional code (such as a QR code (registered trademark)) can be used. In the present embodiment, a barcode will be described as an example of a label. The label information may include, for example, identification information for uniquely identifying a parcel. In this case, the type of characters and the number of digits forming the identification information are not particularly limited.

The label reader 103 may, for example, use a general-purpose imaging camera and extract a label area from the captured image by image recognition and read various information, or may recognize characters and the like written on the label using an optical character recognition/reader (OCR). The label reader 103 may be a dedicated device for reading labels, or may be integrated with another device. The label reader 103 may detect three-dimensional coordinates of the label. Further, a plurality of label readers 103 may be provided corresponding to various sizes of the parcels, or the parcels may be captured from many directions corresponding to various label attachment positions.

Examples of the parcel information according to the present embodiment include a parcel specifying number that is individually assigned to each parcel (for example, identification information for uniquely identifying a parcel), the name, address, and phone number of the sender of the parcel, the name, address, and telephone number of the destination (for example, a recipient), and a type of the parcel. The information is not limited thereto, and items included in the parcel information may be added or deleted as necessary. In the embodiment, the sorting management server 101 acquires the label information from the label reader 103 and uses this label information to make an inquiry to the link server 102, thereby acquiring corresponding parcel information. As described above, in a configuration in which liking with the link server 102 is omitted, the sorting management server 101 may store the label information and the pattern information related to the sorting in association with each other.

The sorting client 104 is an information processing device that controls a projection process or the like for a parcel being transported based on an instruction from the sorting management server 101. In addition, the sorting client 104 acquires imaging results from the distance sensor 106 and the image sensor 107, and detects and manages the parcels based on the imaging results. In addition, the sorting client 104 provides the sorting management server 101 with position information and size information of a detected parcel, information on the time of detection, and the like.

The projector 105 is a projection device that projects a projection image including a predetermined projection pattern to a parcel on the transport path based on an instruction from the sorting client 104. In the present embodiment, the "projection image" refers to an entire image projected by the projector 105 so as to be superimposed on an entire sorting area. The "projection pattern" refers to an image that is displayed in a superimposed manner corresponding to each parcel detected in the sorting area. Therefore, when parcels are detected in the sorting area, the projection image includes one or a plurality of projection patterns depending on the parcels. An example of the projection pattern will be described later.

The distance sensor 106 is a sensor for detecting a distance between the distance sensor 106 and an imaging target (for example, a surface of a parcel), and acquires the detection result as a distance image. The distance image may include image that cannot be recognized by human eyes, such as a table listing numerical values indicating distances. That is, the distance image may be information indicating the relationship between coordinates and distance within a captured area, and there are no particular limitations on the data structure. As the distance sensor 106, for example, an infrared sensor (IR sensor), a stereo camera including a plurality of cameras, or the like may be used.

The image sensor 107 is an imaging device including optical components such as a lens and an image sensor. The image sensor 107 includes, for example, an imaging camera. A three-dimensional camera or a plurality of two-dimensional cameras may be used as the imaging camera. The image sensor 107 captures an image of a transport conveyor including parcels transported by the transport conveyor, and generates a color image. Here, the color image refers to an image in which the color of a surface of an imaging target is expressed in a predetermined gradation. The gradation may include 256 gradations of red, green, blue (RGB) as well as gray scale.

The number of client systems 110 varies depending on the length of the transport conveyor, the detection range of each sensor, and the like. The sorting client 104 may be formed as one machine, and the single sorting client 104 may be configured to control a plurality of projectors 105, a plurality of distance sensors 106, and a plurality of image sensors 107 corresponding to a plurality of sorting areas. In the present embodiment, an example in which the distance sensor 106 and the image sensor 107 are used as sensors is shown, a sensor in which these are integrated may be used, or a configuration in which only one of them is used may be used. Further, another type of sensor may be used. A transport type of the transport conveyor is not particularly limited, and may be configured to transport parcels in a single row, or may be configured to transport parcels in multiple rows, for example.

The devices are communicably connected to each other in a wired/wireless manner. Here, the communication method and the connection method are not particularly limited, and a specific network cable may be used for connection, or a combination of multiple methods may be used for connection.

### (Information Processing Device)

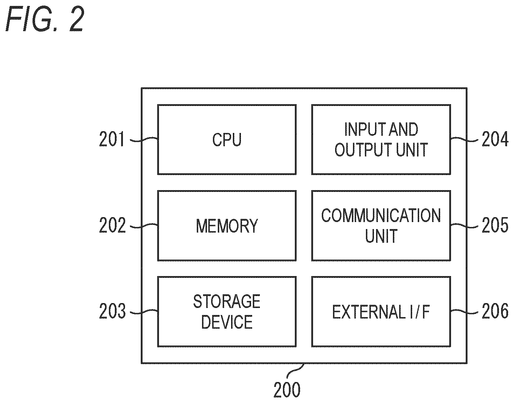

Fig. 2 is a diagram showing an example of a hardware configuration of an information processing device that can be used as the sorting management server 101, the link server 102, or the sorting client 104 according to the present embodiment. Here, the devices are described as having the same configuration, but the devices may have different configurations.

An information processing device 200 includes a central processing unit (CPU) 201, a memory 202, a storage device 203, an input and output unit 204, a communication unit 205, and an external I/F 206. The CPU 201 implements various functions by reading various programs and data stored in the memory 202 and the storage device 203 and executing a process. The CPU 201 may be another arithmetic circuit such as a graphics processing unit (GPU), or may be used in combination with another arithmetic circuit. The memory 202 is a storage area for storing and holding various types of information, and includes, for example, a read only memory (ROM) which is a nonvolatile storage area, a random access memory (RAM) which is a volatile storage area, and the like. The storage device 203 is a storage area for storing and holding various types of information, and includes a hard disk drive (HDD), a solid state drive (SSD), a flash memory, or the like.

The input and output unit 204 receives an instruction from a user through a mouse or a keyboard (not shown), and outputs various types of information through a display (not shown), for example. The communication unit 205 communicates with an external device via a wired or wireless network, and transmits and receives various data and signals. A communication method of the communication unit 205 is not particularly limited, and may be compatible with a plurality of communication methods. For example, wide area network (WAN), local area network (LAN), power line communication, short distance wireless communication (for example, Bluetooth (registered trademark)), or the like may be used. The external I/F 206 is an interface for transmitting and receiving data to and from the external device. The units of the information processing device 200 are communicatively connected to each other via an internal bus (not shown) or the like.

### [Transportation Example]

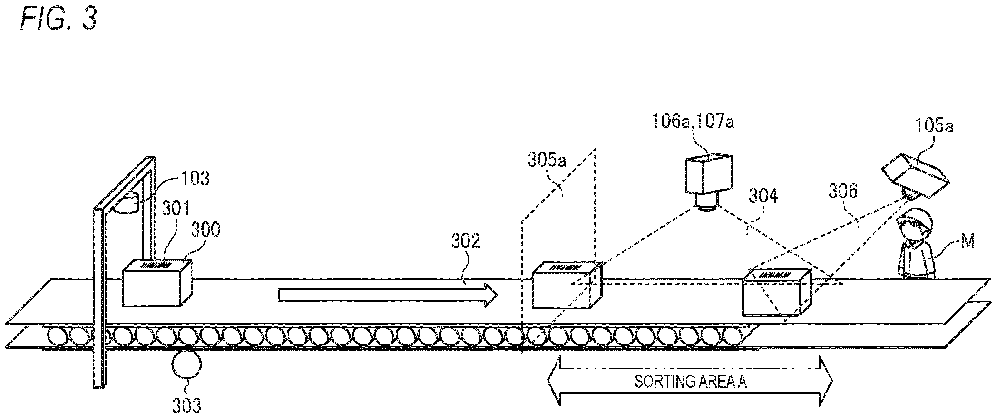

Fig. 3 is a schematic diagram illustrating parcel transportation according to the present embodiment. A label 301 is attached to each parcel 300 to be transported. The label 301 is read by a label reader 103 installed at any position on the transport path while being transported. In the example of Fig. 3, the label 301 is attached to an upper surface of the parcel 300 and is read by the label reader 103 from above, but the embodiment is not limited thereto. For example, the label 301 may be attached to a side surface of the parcel 300, and the label reader 103 may read the label 301 from the side correspondingly.

The parcel 300 is transported by the transport conveyor 302 at any speed. A rotary encoder 303 is installed on the transport conveyor 302 to detect a transport distance at an appropriate time and provide the detected distance to the sorting management server 101. The rotary encoder 303 is attached to a rotation mechanism (not shown) that rotates in association with the transportation of the transport conveyor 302, and outputs a rotational speed of the rotation mechanism. When the transport conveyor 302 is a belt conveyor, the rotation mechanism is a roller in contact with the belt or a motor that moves the belt. When the transport conveyor 302 is a roller conveyor, the rotation mechanism is a roller that forms the transport conveyor 302. Here, it is assumed that a parcel is transported along a direction indicated by an arrow. The transport conveyor 302 changes a transportation speed or stops transporting in response to a command from the user. If necessary, transportation in a reverse direction may be performed. The transportation speed of the transport conveyor 302 may also change due to factors other than the demand from a user, such as physical characteristics of each mechanism of the transport conveyor 302. However, the rotary encoder 303 accurately detects the rotational speed of the rotation mechanism, and is therefore less susceptible to the effects of changes in the transportation speed or the like. The transportation by the transport conveyor 302 may be controlled by, for example, the sorting management server 101 or may be controlled by a control device (not shown) provided separately.

Various sensors (in this example, the distance sensor 106 and the image sensor 107) and the projector 105 are installed downstream of the label reader 103 in the transport direction in correspondence with a plurality of sorting areas. Fig. 3 shows the most upstream sorting area A among the plurality of sorting areas. The various sensors corresponding to the sorting area A capture various images of the sorting area A, and a sorting client 104a uses the images to detect a parcel being transported. Specifically, when the parcel 300 reaches a start position 305a of the sorting area A, the parcel 300 enters an imaging ranges of the various sensors. An imaging range 304 of the distance sensor 106a and the image sensor 107a includes at least the range of the sorting area A. Further, within the range of the sorting area A, a projector 105a projects a predetermined projection image based on an instruction from the sorting management server 101 or the sorting client 104. A projection range 306 of the projector 105a includes at least the sorting area A. A distance from a reading position of the label reader 103 to the start position 305a may be determined according to a processing speed of a processing sequence described later, a reading speed of various sensors, or the like.

A worker M who works on the parcel 300 is positioned around the transport conveyor 302, and performs various tasks as necessary. At this time, the worker M can perform the work based on the projection image (projection pattern or the like) projected by the projector 105.

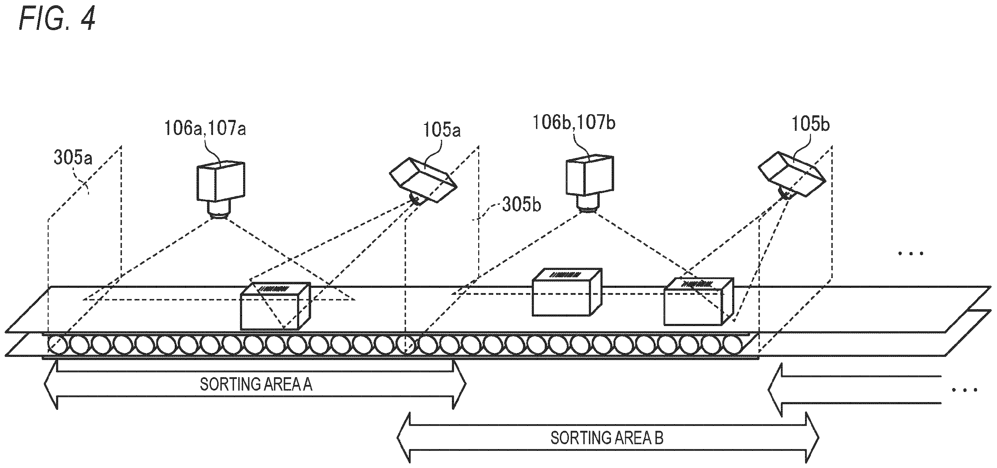

Fig. 4 is a diagram illustrating a plurality of sorting areas corresponding to a plurality of client systems 110, respectively. Here, an example will be described in which two sorting areas A and B are monitored by client systems 110a and 110b, respectively. The number and ranges (for example, a length and a width in the transport direction) of the sorting areas may be determined according to the function of the client system 110. Accordingly, one or a plurality of sorting areas may be further provided downstream of the sorting area B in the transport direction.

The distance sensor 106a and the image sensor 107a capture an image of the sorting area A, and the image is provided to the sorting client 104a. In the sorting area A, a projection image including any projection pattern is projected by the projector 105a. Similarly, the distance sensor 106b and the image sensor 107b capture an image of the sorting area B adjacent to the sorting area A on the downstream side in the transport direction, and the image is provided to the sorting client 104b. In the sorting area B, a projection image including any projection pattern is projected by the projector 105b. In the sorting area B, the parcel transported from the sorting area A is monitored continuously. At this time, as shown in Fig. 4, the sorting areas of the client systems 110 partially overlap, and hereinafter, these areas are also referred to as "handover areas". A start position 305b indicates a start position for monitoring the sorting area B, and is different from an end position (not shown) for monitoring the sorting area A adjacent to the upstream side of the sorting area B. Details of the handover area will be described later.

### [Processing Sequence]

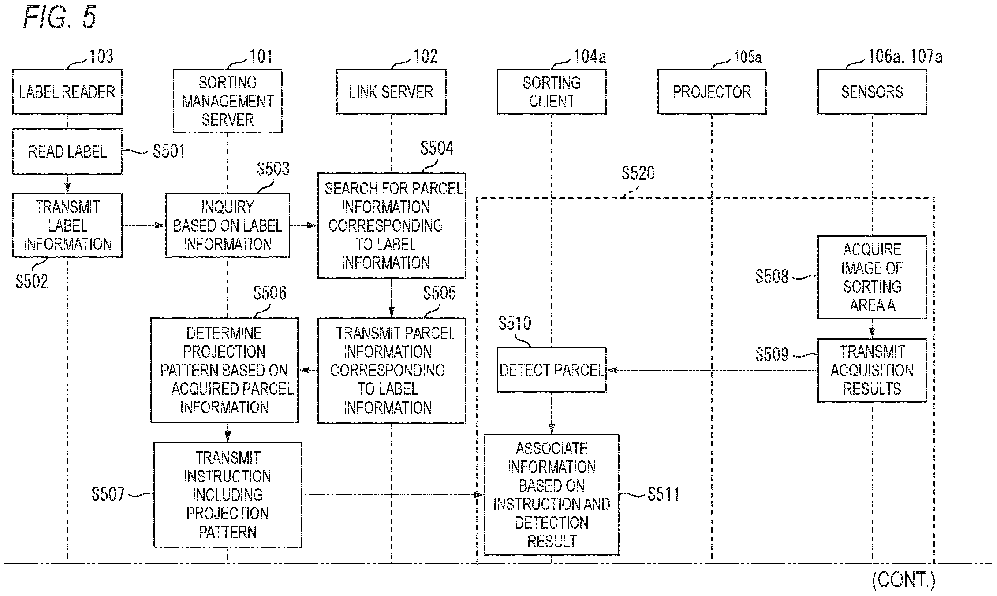

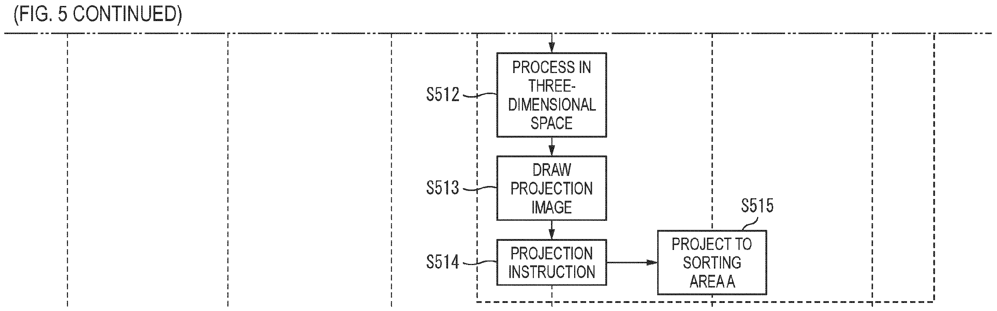

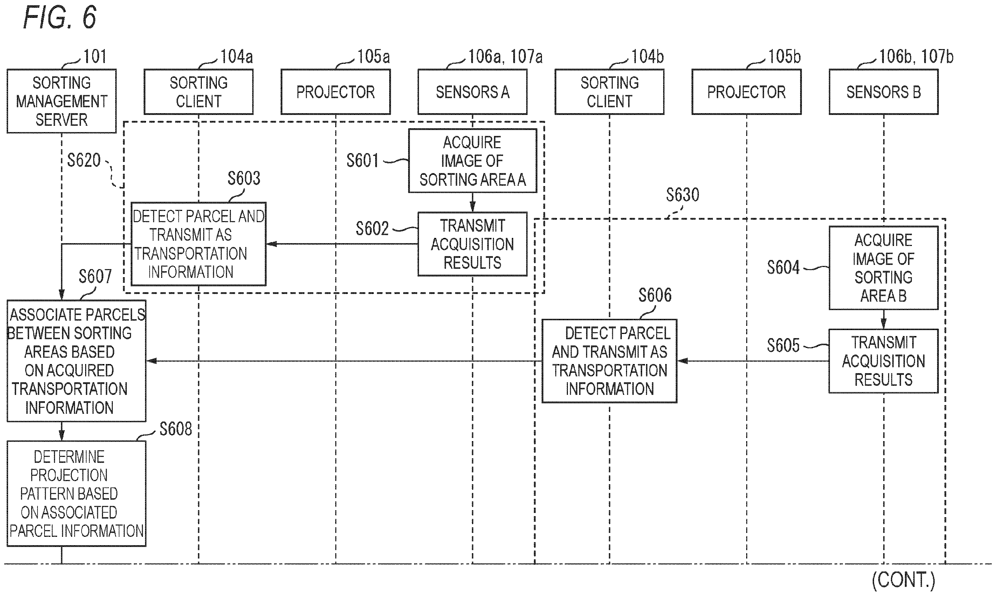

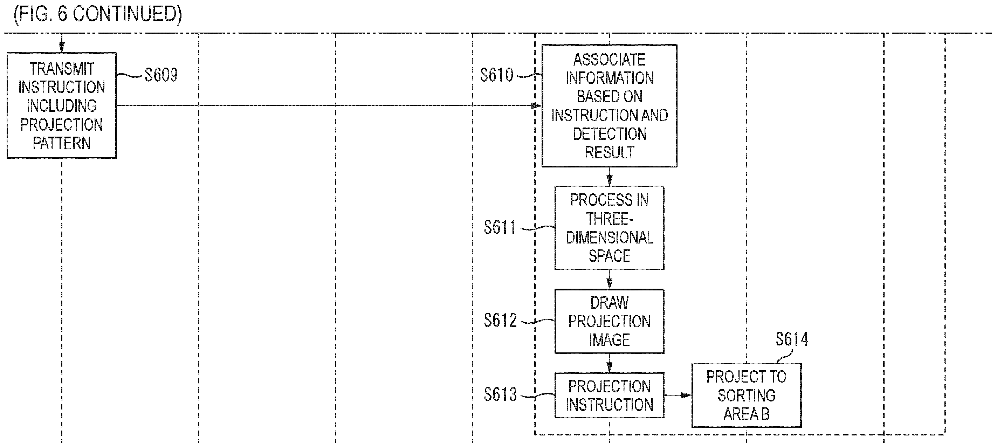

The processing sequence of the parcel sorting system 100 according to the present embodiment will be described with reference to Figs. 5 and 6. The processing of each device may be implemented by a processing subject (CPU or the like) of each processing executing programs corresponding to various functions. It is assumed that when the processes shown in Fig. 5 or Fig. 6 is started, the transport conveyor 302 starts to operate, thereby transporting the parcels in sequence. Note that the subject of each process in the following processing sequence is an example, and some of the processes may be executed by another device. For example, the sorting client 104 may be configured to execute a part of the processes of the sorting management server 101 described below. Alternatively, the servers and the sorting clients shown in Fig. 1 may be implemented by one device, and the following processing sequence may be executed by the single device.

The label reader 103 detects a label attached to a parcel being transported on the transport conveyor 302 and reads label information (step S501).

The label reader 103 transmits the label information read in S501 to the sorting management server 101 (step S502). The information transmitted at this time may include, in addition to the information indicated by the label, a reading time and position information (for example, three-dimensional information) detected when the label is read.

The sorting management server 101 acquires the label information transmitted from the label reader 103 (step S503). At this time, the sorting management server 101 acquires a detection value from the rotary encoder 303 provided in the transport conveyor 302, and stores the detection value in association with the label information. The detection value by the rotary encoder 303 corresponds to a movement distance of the transport conveyor 302 based on the rotational speed. Further, the sorting management server 101 uses the acquired label information to inquire about parcel information of the link server 102.

The link server 102 searches a predetermined database (DB) for and specifies parcel information corresponding to the label information indicated by the inquiry from the sorting management server 101 (step S504). The DB may be provided inside the link server 102, or may be provided inside an external device (not shown) connected to the link server 102 via a network.

The link server 102 transmits the parcel information specified in step S504 to the sorting management server 101 as a response to the inquiry (step S505).

The sorting management server 101 determines a projection pattern based on the parcel information acquired from the link server 102 (step S506). The projection patterns according to the present embodiment are defined and stored in advance as a plurality of patterns. The projection pattern may be determined, for example, according to a destination (for example, a delivery address) indicated in the parcel information, or according to the sorting area.

The sorting management server 101 transmits a projection instruction including the projection pattern determined in step S506 to the sorting client 104 (step S507). Here, the following description will be given assuming that the projection instruction is transmitted to the sorting client 104a of the client system 110a corresponding to the sorting area A located at the most upstream position of the transport path shown in Fig. 3. That is, each parcel is first transported toward the sorting area A. In addition to the projection pattern, the projection instruction may also include the parcel information acquired in step S506, the label information read by the label reader 103 in step S501, and the information on the time when the label information is read. Here, the projection instruction may be transmitted from the sorting management server 101 to the sorting client 104a in response to an inquiry about information related to a parcel that is made when the parcel is detected by the sorting client 104a using the sensors. Alternatively, the label information may be transmitted to the sorting client 104a as a result of the sorting management server 101 receiving the label information from the label reader 103.

Step S520 (step S508 to step S515) is a process that is repeatedly performed by the client system 110 (here, the client system 110a) in order to monitor each parcel being transported in the sorting area (here, the sorting area A). Here, for convenience, the distance sensor 106 and the image sensor 107 (here, the distance sensor 106a and the image sensor 107a) are collectively referred to as "sensors".

The sensors capture an image of the inside of the sorting area A and acquire the image (step S508). In the present embodiment, the sorting client 104a is described as detecting a parcel using the image captured by the sensors, but a configuration in which a part of the process is performed by the sensors may also be used. For example, the sensors may be configured to specify an area corresponding to a parcel (presence or absence of the parcel), and to detect three-dimensional coordinates (position) and size (length, width, height) or the like of each parcel.

The sensors transmit acquisition results to the sorting client 104a (step S509). At this time, the sensors may perform a predetermined process on the acquired image and then transmit the processed image to the sorting client 104a. For example, in the case of the image sensor 107a, any image processing (for example, image compression or correction) may be performed on the acquired image information.

The sorting client 104a detects a parcel based on the acquisition results transmitted from the sensors in step S509 (step S510). Specifically, the sorting client 104a specifies one or more parcels being transported on the transport conveyor 302 in the sorting area A based on the acquisition results from the sensors. A known method may be used for detecting the parcel, and the method is not particularly limited. For example, an area corresponding to the parcel may be detected by area segmentation using machine learning. Alternatively, a predefined pattern may be used to detect the parcel by pattern matching.

The sorting client 104a associates each piece of information based on the projection instruction transmitted from the sorting management server 101 in step S507 and the detection result in step S510 (step S511). Accordingly, the one or more detected parcels is respectively associated with various types of information (projection patterns or the like) indicated in the projection instruction transmitted from the sorting management server 101.

The projection pattern is, for example, an image of a number surrounded by a circular frame, with a color indicating a sorting location corresponding to the delivery address of the parcel. Here, the number corresponds to, for example, a number of a truck transporting the sorted parcels (a number of the truck itself, a parking lot number, or the like), a number of a shelf or a box to be loaded onto the truck, or the like. In addition, the image of the number may not directly correspond to the number of a shelf, a box, or the like, but may correspond to a number of a chute (not shown) through which the picked up parcel is moved to another location or a truck, or the like. Since a parking position of a truck or the like frequently changes depending on traffic conditions or the like, it may be difficult to always match the sorting destinations as viewed from the vicinity of the transport conveyor 302. Therefore, a chute is placed between the transport conveyor 302 and a transport track, and the chute number is projected around the transport conveyor 302, so that it is possible to cope with changes in the sorting destination by, for example, rearranging the exit of the chute without always changing the configuration around the transport conveyor 302. In this case, a content of the projection pattern may be switched in response to a change in the conditions.

Other examples of the number displayed as the projection pattern include a postal code corresponding to a delivery address, or the number of a worker who is to pick up the parcel P. Further, examples of information other than numbers that can be displayed include arrows (for example, right or left with respect to the transport direction of the transport conveyor 302) or characters (for example, "left" or "right") indicating a sorting direction. Further, the display form is not limited to numbers surrounded by a circular frame, and various other configurations may be used, such as numbers surrounded by a square frame ("3", "359", "24735"). Further, the projection pattern is not limited to numbers or characters surrounded by a frame, but may be numbers or characters in white against a solid background. Also, the shape of the numbers or characters to be displayed may be changed to a circle, a triangle, a square, and the like, depending on the information to be displayed. Alternatively, a picture that can be individually associated with each piece of displayed information may be displayed.

Further, the projection pattern is not limited to a still image, but may be an animation. Examples of animations may include blinking, scaling, changing color, and the like of the above examples. Also, an animation reflecting the sorting direction may be projected. Examples of animations that reflect the sorting direction include moving a light ray or light spot in the sorting direction, changing the color forming the whole or part of the projection pattern in the sorting direction, and displaying an arrow moving in the sorting direction. When only a part of the projection pattern is to be animated, a part having a large influence on the determination on the sorting destination of the worker, such as of a numeral or an arrow, may not be changed, and a part having a small influence on the determination on the sorting destination, such as a frame line, may be changed. In situations where there are few sorting destination options, for example, it is more efficient to intuitively convey the sorting direction rather than the meaning of the numbers projected within the frame, the numbers or arrows may be moved in the sorting direction within a fixed frame. Further, the animation may be repeatedly projected or may be projected only once.

The projection pattern is not limited to an indication of the sorting destination, but may also be a notification of an error occurring in the parcel sorting system 100 or when a worker has overlooked a parcel.

Further, instead of projecting the projection pattern directly onto the parcel, the worker may be made to perceive as if a projection pattern is being projected onto the parcel through glasses capable of displaying an image. That is, if the worker wears special glasses capable of displaying an image, the projection pattern here may be superimposed on the image of the parcel viewed through the glasses.

Further, the projection pattern may be projected onto a location other than a parcel. For example, general notification content for workers may be projected onto an area of the transport conveyor 302 where no parcel is present. Examples of such notifications include advance notice of an increase or decrease in the volume of arriving parcels, a remaining time for work, and greetings for workers.

The sorting client 104a performs a process in a three-dimensional space for the one or more parcels detected in step S510 (step S512). In the process performed in the three-dimensional space, each parcel is represented in a three-dimensional shape in a three-dimensional coordinate system on the transport path. Depending on the number and arrangement of sensors, information on surfaces located in blind spots of the sensors may not be obtained. In this case, the three-dimensional shape of each parcel may be complemented to match the shape of a general parcel (for example, a rectangular parallelepiped shape). The instruction can be projected as long as the three-dimensional shape of a surface on which the projection image is to be projected among the surfaces forming the parcel can be recognized, so that only the surface as a projection target or a set of surfaces including the surface as the projection target may be represented as the three-dimensional shape of the parcel. In the present embodiment, the surface as the projection target is an upper surface of the parcel, and may be a side surface or the like. The sensors of the present embodiment are disposed above so as to at least obtain information on the upper surface of the parcel. Alternatively, when a projection target surface is a side surface or the like, the parcel is imaged from a position matched with the surface.

It is assumed that the origin and each coordinate axis of the three-dimensional coordinate system on the transport path are previously defined within the client system 110a. In addition, it is also assumed that the three-dimensional coordinate systems of the label reader 103 and each of the plurality of client systems 110 have a correspondence relationship established in advance and are adjusted as necessary. Here, the plurality of three-dimensional coordinate systems may share an absolute coordinate system in the entire parcel sorting system 100 and correspond to each other in the absolute coordinate system. The plurality of three-dimensional coordinate systems may correspond to each other in a relative coordinate system. When the relative coordinate system is used, for example, the coordinate system used by the client system 110 located upstream of the parcel sorting system 100 may be used as a reference, and the coordinate system used by other client systems 110 may be defined as a coordinate system relative to the reference client system 110. The coordinate system serving as the reference for the relative coordinate system may be any coordinate system within the parcel sorting system 100. For example, other coordinate systems may be used, such as those used by other client systems or by a group of sensors. This process may be performed in a two-dimensional space, that is, a flat space, if adjustment in a height direction is not required due to the shape of the parcel to be transported or the configuration of the projector 105.

The sorting client 104a draws a projection image including a projection pattern associated with each of one or a plurality of parcels having the three-dimensional shape processed in step S512 (step S513). Specifically, the sorting client 104a calculates the projection position of the projection pattern for each of the parcels, and determines the projection image for the entire sorting area A. The projection image is, for example, an image in which the projection pattern for each of the parcels is included in an area corresponding to each parcel, and a black image is included in an area where no parcel is present. By using such a projection image, projection onto a large number of parcels can be allowed while keeping the number of projectors to a minimum. In a general projector, the closer a projection target surface is to the projector, the smaller the image is projected, and the farther the projection target surface is, the larger the image is projected. Therefore, the size of the projection pattern for each parcel in the projection image drawn in step S512 may be adjusted to be larger as a distance between each parcel and the projector is shorter.

The sorting client 104a issues a projection instruction to the projector 105a according to the projection image determined in step S513 (step S514).

The projector 105a projects the projection image onto the sorting area Abased on the projection instruction from the sorting client 104a at step S514 (step S515). Since each parcel is continuously transported by the transport conveyor 302, the process shown in step S520 may be continuously executed while the transportation is continued.

### (Parcel Handover Process)

In Fig. 5, the process has been described focusing on the first (most upstream) sorting area A positioned downstream of the reading position of the label reader 103 in the transport direction. As described above, a plurality of sorting areas are provided on the transport path of the transport conveyor 302, and between the sorting areas, monitoring of each parcel is handed over (hereinafter also referred to as "handover") between the client systems 110.

A processing sequence related to the handover process will be described with reference to Fig. 6. Here, a handover process between the client system 110a corresponding to the sorting area A and the client system 110b corresponding to the sorting area B adjacent to the sorting area A on the downstream side in the transport direction on the transport path will be described as an example. Since the number of sorting areas may vary depending on a length of the transport path, the handover process is performed in a timely manner between client systems 110 corresponding to adjacent sorting areas. In the client system 110a, the processing sequence described with reference to Fig. 5 is performed in parallel.

Step S620 (step S601 to step S603) is a process that is repeatedly performed by the client system 110a in order to monitor each parcel being transported in the sorting area A. Here, for convenience, the distance sensor 106a and the image sensor 107a are collectively referred to as sensors A.

The sensors A capture an image of the inside of the sorting area A and acquire the image (step S601). Here, it is assumed that the sorting client 104a detects parcels using various images captured by the sensors A as shown in Fig. 5. When a plurality of parcels are being transported to the sorting area A, each parcel is detected. In the case of the client system 110a, this process corresponds to step S508 in Fig. 5.

The sensors A transmit acquisition results to the sorting client 104a (step S602). At this time, the sensors A may perform a predetermined process on the acquired image and then transmit the processed image to the sorting client 104a. In the case of the client system 110a, this process corresponds to step S509 in Fig. 5.

The sorting client 104a detects a parcel based on the acquisition results transmitted from the sensors A in step S602 (step S603). Further, the sorting client 104a transmits transportation information of the detected parcel to the sorting management server 101 (step S603). Specifically, according to the result or the like of the process in the three-dimensional space that is already performed in the processing sequence of Fig. 5, a parcel approaching a boundary with the sorting area on the downstream side (here, the sorting area B) may be specified among the tracked parcels, and information related to the parcel may be transmitted as the transportation information. A known method may be used for detecting the parcel, and the method is not particularly limited. For example, an area corresponding to the parcel may be detected by area segmentation using machine learning. Alternatively, a predefined pattern may be used to detect the parcel by pattern matching.

Step S630 (step S604 to step S606 and step S610 to step S614) is a process that is repeatedly performed by the client system 110b in order to monitor each parcel being transported in the sorting area B. Here, for convenience, the distance sensor 106b and the image sensor 107b are collectively referred to as sensors B.

The sensors B capture an image of the inside of the sorting area B and acquire the image (step S604). Here, similarly to the sorting area A, it is assumed that the sorting client 104b detects parcels using various images captured by the sensors B. When a plurality of parcels are being transported to the sorting area B, each parcel is detected.

The sensors B transmit acquisition results to the sorting client 104b (step S605). At this time, the sensors B may perform a predetermined process on the acquired information and then transmit the processed image to the sorting client 104b.

The sorting client 104b detects a parcel based on the acquisition results transmitted from the sensors B in step S605 (step S606). Further, the sorting client 104b transmits transportation information of the detected parcel to the sorting management server 101. For example, a parcel (that is, a newly transported parcel) positioned at the boundary with the sorting area on the upstream side (here, the sorting area A) among the detected parcels may be specified, and information (position, size, and the like) related to the parcel may be transmitted as the transportation information.

The sorting management server 101 specifies a parcel to be handed over between the sorting areas (here, between the sorting area A and the sorting area B) based on the transportation information transmitted from the sorting client 104a in step S603 and the transportation information transmitted from the sorting client 104b in step S606 (step S607). That is, in order to hand over a monitoring subject of a certain parcel from the client system 110a to the client system 110b as the parcel is transported, the parcels detected by the respective client system 110 which are positioned on the boundary between the sorting areas are associated as being the same parcel. For example, the sorting management server 101 may perform the association by specifying which of pieces of the managed parcel information corresponds to the parcel that crosses the sorting areas.

The sorting management server 101 determines a projection pattern for the downstream sorting area (here, the sorting area B) based on the association in step S607 and the parcel information used in the upstream sorting area (here, the sorting area A) (step S608). The projection patterns according to the present embodiment are defined and stored in advance as a plurality of patterns. Note that the projection pattern may be the same as that of the upstream sorting area (here, the sorting area A), or may be switched depending on the sorting area being used for transportation, even for the same parcel.

The sorting management server 101 transmits a projection instruction including the projection pattern determined in step S608 to the sorting client 104 (step S609). Here, the projection instruction is transmitted to the sorting client 104b of the client system 110b to which the monitoring of the parcel is handed over. The projection instruction may include not only the projection pattern but also parcel information of the corresponding parcel.

The sorting client 104b associates each piece of information based on the projection instruction transmitted from the sorting management server 101 in step S609 and the detection result in step S606 (step S610). Specifically, the sorting client 104b specifies one or more parcels being transported on the transport conveyor 302 in the sorting area B based on detection results from the sensors B. Further, the sorting client 104b associates the specified one or more parcels with various types of information included in the projection instruction transmitted from the sorting management server 101. Accordingly, the one or more parcels detected by the sorting client 104b is respectively associated with various types of information (projection patterns or the like) indicated in the projection instruction transmitted from the sorting management server 101.

The sorting client 104b performs a process in a three-dimensional space for the one or more parcels specified in step S610 (step S611). In the process performed in the three-dimensional space, each parcel is represented in a three-dimensional shape in a three-dimensional coordinate system on the transport path. This process may be the same as the process of step S512 in Fig. 5.

The sorting client 104b draws a projection image including a projection pattern associated with each of one or a plurality of parcels having the three-dimensional shape processed in step S611 (step S612). Specifically, the sorting client 104b calculates the projection position of the projection pattern for each of the parcels, and determines the projection image for the entire sorting area B. The projection image here may have the same configuration as that in step S513 described in Fig. 5.

A plurality of projectors may be installed in association with one sorting area. For example, one sorting area may be further subdivided into ranges to be covered by each of the plurality of projectors. In this case, the sorting client 104b generates a projection image corresponding to the assigned range for each of the plurality of projectors. In this case, an example of the projection image is an image in which positions within the assigned range where there is a parcel contain a projection pattern for each parcel, and positions within the assigned range where there is no parcel contain a black image. In this way, even if it is difficult for a single projector to project onto the entire sorting area due to the performance of the projector or a limit on the height at which the projector can be installed, projection onto the entire sorting area can be performed.

In addition, each projector may be responsible for one parcel and may project only onto that parcel. In this case, each of the plurality of projectors changes a projection angle according to the movement of the parcel it is responsible for, or projects a black image at a position other than the position of the parcel it is responsible for, thereby performing projection toward only the parcel it is responsible for. In this way, each of the plurality of projectors can perform projection using optimum parameters for the parcel that the projector is responsible for. For example, since the focal length of each of the plurality of projectors can be automatically adjusted, even if there is variation in the height of the parcel, an image that is in focus on each parcel can be projected.

The sorting client 104b issues a projection instruction to the projector 105b according to the projection image determined in step S612 (step S613).

The projector 105b projects the projection image onto the sorting area B based on the projection instruction from the sorting client 104b at step S613 (step S614). Since each parcel is continuously transported by the transport conveyor 302, each of the client systems 110 responsible for monitoring the sorting area B and subsequent areas may continue to execute the process shown in step S630 while the transportation is continued.

### [Parcel Recognition]

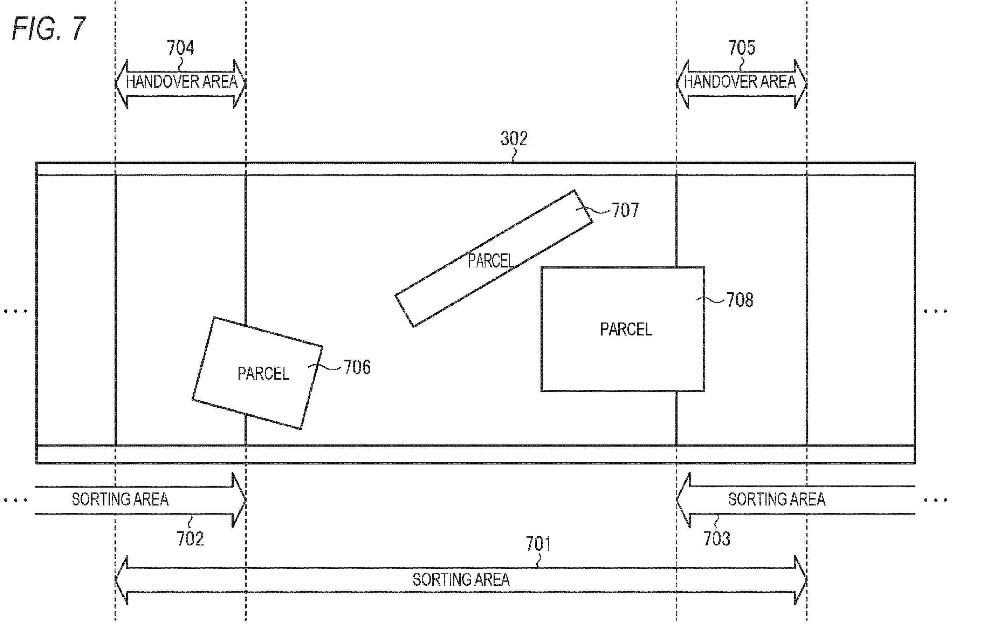

Fig. 7 is a diagram illustrating parcel recognition in the sorting area according to the present embodiment. Here, a certain sorting area 701 on the transport path of the transport conveyor 302 and adjacent sorting areas 702 and 703 on the upstream side and the downstream side thereof in the transport direction will be described as an example. It is also assumed that three parcels 706,707, and 708 are transported by the transport conveyor 302.

A handover area 704 is provided between the sorting area 701 and the sorting area 702. The handover area 704 is an area where detection is performed by sensors in both a client system corresponding to the sorting area 701 and a client system corresponding to the sorting area 702. Similarly, a handover area 705 is provided between the sorting area 701 and the sorting area 703. The handover area 705 is an area where detection is performed by sensors in both a client system 110 corresponding to the sorting area 701 and a client system 110 corresponding to the sorting area 703.

In each sorting area according to the present embodiment, a range of the parcel being transported is specified as appropriate. By specifying the range of the parcel, the size and shape of the parcel are recognized. The range here does not need to completely match the shape of the parcel, and a certain margin may be provided. The size, shape, and position of the projection pattern projected on each parcel are adjusted according to the range of each parcel. The adjustment method is not particularly limited, and may be performed in consideration of, for example, the visibility of the projection pattern and the efficiency of work.

In the present embodiment, the label reader 103 and the image sensor 107 are described as different, but the label reader 103 may be used in place of the image sensor 107. Specifically, the position of the label read by the label reader 103 is treated as the position of the parcel, and the projection image is projected onto the position of the label. Since the identification information of the parcel can be obtained from the label, by adopting such a configuration, a process of associating the same parcel between the client systems 110 becomes unnecessary. However, since an area that can be recognized by the label reader 103 is limited to the area of the label, compared to the tracking by the image sensor 107 capable of tracking the entire parcel, the degree of freedom in the size of the projection image and the position to which the projection image is projected is reduced. Similarly, the image sensor 107 may be used in place of the label reader 103. Specifically, the label information may be acquired from the image of the label included in the image acquired by the image sensor 107. Hereinafter, an example of tracking a parcel using an image captured by the image sensor 107 will be described unless otherwise specified, but the label reader 103 may be used in place of the image sensor 107.

### (Calibration of Imaging Camera and Infrared Camera)

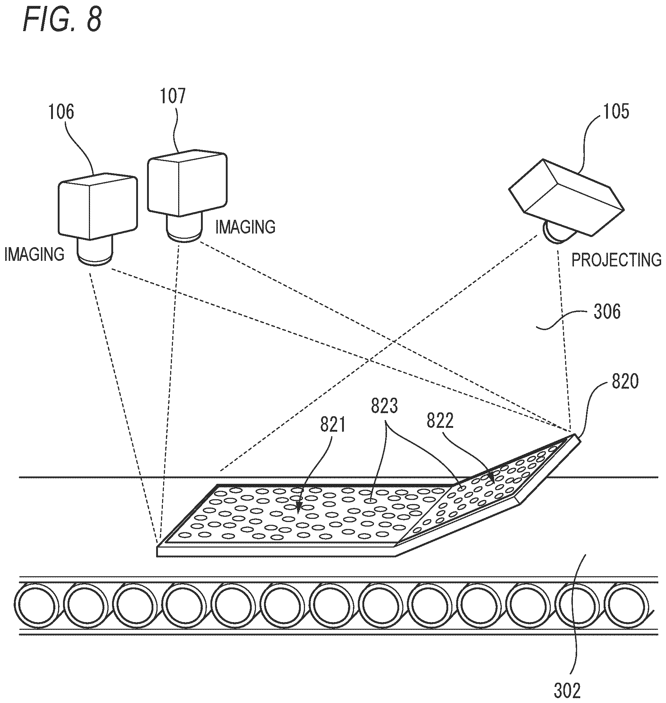

Fig. 8 is a schematic diagram illustrating calibration of an imaging camera 107 and an infrared camera 106 according to Embodiment 1.

As described above, the image sensor 107 may be implemented by the imaging camera 107. An image captured by the imaging camera 107 is referred to as a captured image. As described above, the distance sensor 106 may be implemented by the infrared camera 106. An image captured by the infrared camera 106 is referred to as an infrared image.

As shown in Fig. 8, the installation position of the imaging camera 107 may be different from the installation position of the infrared camera 106. Therefore, when the imaging camera 107 and the infrared camera 106 are installed, calibration is performed to calculate a correction parameter for mapping a captured image captured from the position of the imaging camera 107 to three-dimensional coordinates and a correction parameter for mapping an infrared image captured from the position of the infrared camera 106 to three-dimensional coordinates.

The calibration may be performed using a board 820 as shown in Fig. 8. The board 820 may have a flat surface 821 that is aligned with the surface of the transport conveyor 302, and an inclined surface 822 that extends obliquely in the height direction from one side of the flat surface 821. In FIG. 8, the board 820 has one inclined surface 822, but the board 820 may have two or more inclined surfaces 822. The inclined surface 822 is used for calibration in a direction perpendicular to the surface of the transport conveyor 302. Therefore, when calibration is performed only in the direction along the surface of the transport conveyor 302, the inclined surface 822 may be omitted. The configuration in which the board 820 is used for calibration is an example. Instead of the board 820, a box on which a mark or a two-dimensional code is attached may be used for calibration.

As shown in Fig. 8, a plurality of marks 823 may be drawn on the surfaces of the flat surface 821 and the inclined surface 822 of the board 820. The shape of the marks 823 may be a circle. The shape of the marks 823 is not limited to a circle, and may be a polygon, a predetermined pattern, or the like.

In the calibration, the information processing device 104 used as the sorting client 104 at the time of operation receives a captured image from the imaging camera 107 obtained by imaging the board 820, detects the mark 823 from the captured image, and calculates a correction parameter related to the captured image based on the detected mark 823. Similarly, in the calibration, the information processing device 104 receives an infrared image from the infrared camera 106 obtained by imaging the board 820, detects the mark 823 from the infrared image, and calculates a correction parameter related to the infrared image based on the detected mark 823.

The correction parameters described above may be calculated by a known technique. For example, the information processing device 104 calculates the inclination of the captured image with respect to the horizontal plane based on positions and shapes of a plurality of (for example, three) marks 823 detected from the flat surface 821 of the board 820 in the captured image, and calculates the inclination of the captured image with respect to the vertical plane based on positions and shapes of a plurality of (for example, three) marks 823 detected from the inclined surface 822 of the board 820 in the captured image, thereby calculating correction parameters for mapping the captured image to three-dimensional coordinates. Similarly, the information processing device 104 calculates the inclination of the infrared image with respect to the horizontal plane based on positions and shapes of a plurality of (for example, three) marks 823 detected from the flat surface 821 of the board 820 in the infrared image, and calculates the inclination of the infrared image with respect to the vertical plane based on positions and shapes of a plurality of (for example, three) marks 823 detected from the inclined surface 822 of the board 820 in the infrared image, thereby calculating correction parameters for mapping the infrared image to three-dimensional coordinates.

Accordingly, at the time of operation, the sorting client 104 can detect the three-dimensional coordinates (position), the size (length, width, height), and the like of the parcel 300 transported through the transport conveyor 302 with high accuracy using the captured image to which the correction parameter is applied and the infrared image to which the correction parameter is applied.

Here, when the number of marks 823 detected from the board 820 is small (for example, three), the accuracy of the correction parameters tends to be relatively low. As the number of marks 823 detected from the board 820 increases, the accuracy of the correction parameters tends to be relatively higher.

An installation worker who performs the calibration repeats work of placing the board 820 on the transport conveyor 302, causing the imaging camera 107 and the infrared camera 106 to image the board 820, causing the information processing device 104 to calculate the correction parameter, changing the position of the board 820 when the accuracy of the calculated correction parameter is low, causing the imaging camera 107 and the infrared camera 106 to image the board 820 again, and causing the information processing device 104 to calculate the correction parameter again. However, the method for the calibration work is time-consuming and labor-intensive, and has low work efficiency. In particular, it is difficult to place the board 820 in a position where the accuracy of both the correction parameters of the imaging camera 107 and the correction parameters of the infrared camera 106 is sufficient. Hereinafter, a method of improving the work efficiency of the calibration will be described.

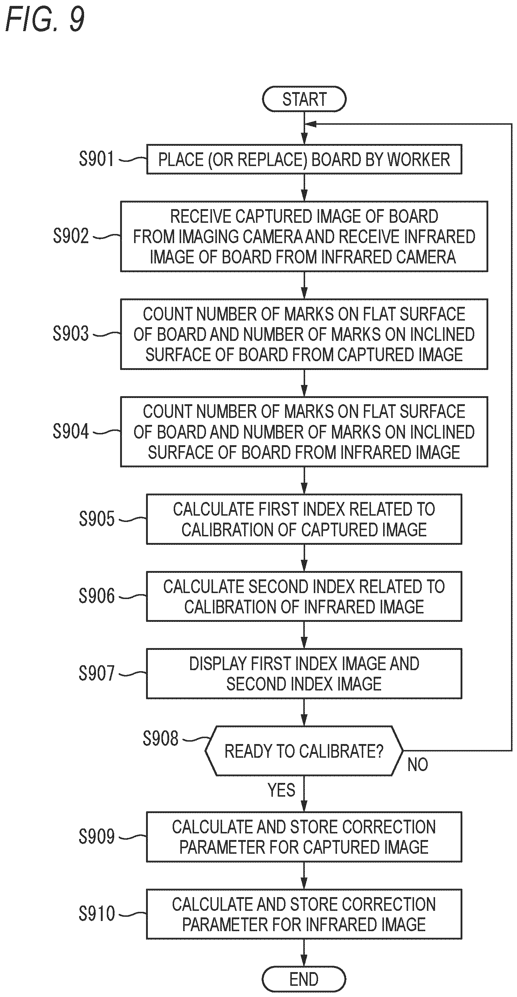

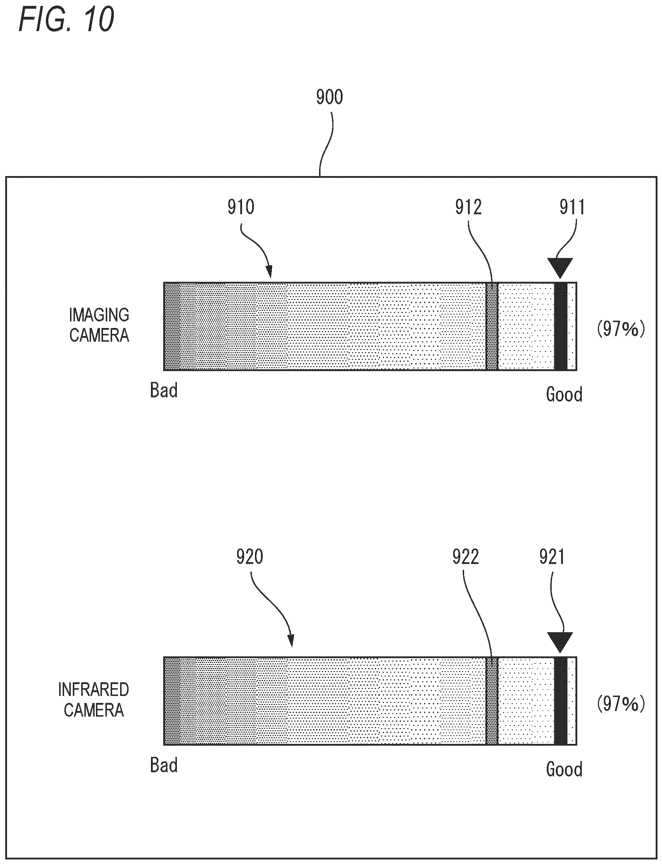

Fig. 9 is a flowchart showing a calibration work procedure according to Embodiment 1. Fig. 10 is a diagram showing an index image related to calibration according to Embodiment 1. Next, a method for calibration work according to the present embodiment will be described with reference to Figs. 9 and 10.

An installation worker who performs calibration places the board 820 within a range in which the projector 105 above the transport conveyor 302 can project a projection image (step S901). At this time, the information processing device 104 may cause the projector 105 to project a projection image showing the maximum range that can be projected. In this case, the installation worker need only place the board 820 within a range of the projected projection image (projection range 306).

The information processing device 104 receives a captured image of the board 820 from the imaging camera 107 and receives an infrared image of the board 820 from the infrared camera 106 (step S902).

The information processing device 104 detects the marks 823 from the captured image and counts the number of marks 823 on the flat surface 821 of the board 820 and the number of marks 823 on the inclined surface 822 of the board 820 (step S903).

The information processing device 104 detects the marks 823 from the infrared image and counts the number of marks 823 on the flat surface 821 of the board 820 and the number of marks 823 on the inclined surface 822 of the board 820 (step S904).

The information processing device 104 calculates an index related to calibration of the captured image (hereinafter, referred to as a first index 911) based on the number of marks 823 on the flat surface 821 and the number of marks 823 on the inclined surface 822 which are counted in step S903 (step S905). The first index 911 may have a tendency to increase as the number of counted marks 823 increases. In general, the greater the number of counted marks 823, the greater the likelihood that the accuracy of the calibration is improved. Therefore, it can be expected that the greater the first index is, the greater the accuracy of the calibration related to the captured image is.

The information processing device 104 calculates an index related to calibration of the infrared image (hereinafter, referred to as a second index 921) based on the number of marks 823 on the flat surface 821 and the number of marks 823 on the inclined surface 822 which are counted in step S904 (step S906). The second index 921 may have a tendency to increase as the number of counted marks 823 increases. In general, the greater the number of counted marks 823, the greater the likelihood that the accuracy of the calibration is improved. Therefore, it can be expected that the greater the second index is, the greater the accuracy of the calibration related to the infrared image is.

As shown in Fig. 10, the information processing device 104 outputs a first index image 910 indicating the first index 911 related to the calibration of the imaging camera 107 and a second index image 920 indicating the second index 921 related to the calibration of the infrared camera 106 to a display device 900 (for example, a liquid crystal display) connected to the information processing device 104 (step S907). As shown in Fig. 10, a first threshold 912 may be displayed in the first index image 910, and a second threshold 922 may be displayed in the second index image 920.

The first threshold 912 may be set to a value larger than the first index 911 calculated when the number of marks 823 detected from at least one of the flat surface 821 and the inclined surface 822 of the board 820 (for example, both the flat surface 821 and the inclined surface 822) is less than three. In other words, the first threshold 912 may be set to a value larger than the first index 911 calculated when the number of marks 823 detected from at least one of the flat surface 821 and the inclined surface 822 of the board 820 is a predetermined number of three or more.

The second threshold 922 may be set to a value larger than the second index 921 calculated when the number of marks 823 detected from at least one of the flat surface 821 and the inclined surface 822 of the board 820 (for example, both the flat surface 821 and the inclined surface 822) is less than three. In other words, the second threshold 922 may be set to a value larger than the second index 921 calculated when the number of marks 823 detected from at least one of the flat surface 821 and the inclined surface 822 of the board 820 is a predetermined number of three or more.

As described above, by displaying the first threshold 912 in the first index image 910, the installation worker can check at a glance whether the first index 911 exceeds the first threshold 912. Similarly, by displaying the second threshold 922 in the second index image 920, the installation worker can check at a glance whether the second index 921 exceeds the second threshold 922. When the first index 911 exceeds the first threshold 912 and the second index 921 exceeds the second threshold 922, additional indications may be provided to more clearly indicate that each index exceeds each threshold. The additional indications may be, for example, displayed as an image different from the first index image 910 and the second index image 920, or may be displayed by changing the display mode such as the color of the first index image 910 and the second index image 920. That is, any display mode may be used as long as the content to be displayed is changed between a case where either of the indexes does not exceed the threshold and a case where both of the indexes exceed the threshold.

The information processing device 104 determines whether the installation worker instructs that preparation for calibration is completed (step S908).

When the installation worker does not instruct that the preparation for calibration is completed (step S908: NO), the information processing device 104 returns the process to step S901. For example, the installation worker views the first index image 910 and the second index image 920 displayed in step S907, and if the first index 911 is less than the first threshold 912 or the second index 921 is less than the second threshold 922, the installation worker changes the position of the board 820 without instructing that the preparation for calibration is completed. In this case, the processes of steps S901 to S907 are performed on the position of the board 820 after the change.

When the installation worker instructs that the preparation for calibration is completed (step S908: YES), the information processing device 104 advances the process to the next step S909. For example, the installation worker views the first index image 910 and the second index image 920 displayed in step S907 while changing the position of the board 820, and if the first index 911 is equal to or greater than the first threshold 912 and the second index 921 is equal to or greater than the second threshold 922, the installation worker instructs that the preparation for calibration is completed. The instruction that the preparation for calibration is complete may be given automatically or manually by the installation worker.

The information processing device 104 calculates a correction parameter related to the captured image based on the mark 823 detected in step S903, and stores the correction parameter in the storage device 203 (step S909).

The information processing device 104 calculates a correction parameter related to the infrared image based on the mark 823 detected in step S904, and stores the correction parameter in the storage device 203 (step S910). The process ends.

Accordingly, the installation worker who performs calibration can change the position of the board 820 while viewing the first index image 910 and the second index image 920. Therefore, the board 820 can be placed at a position where the accuracy of both the correction parameter for the imaging camera 107 and the correction parameter for the infrared camera 106 is sufficient. That is, the work efficiency of the calibration is improved.

### <Other Embodiments>

In the above-described embodiment, the projection image from the projector 105 may be used to calculate the correction parameter. For example, by projecting a predetermined image (for example, a light and dark pattern) from the projector 105 onto the board 820 and analyzing how the image is captured by the imaging camera 107 or the infrared camera 106, it is possible to calculate correction parameters for matching the coordinate system of the projector 105 and each camera. In this way, calibration can be performed between the projector 105 and the imaging camera 107, or between the projector 105 and the infrared camera 106.

As an example of calibration using a light and dark pattern projected from the projector 105, a spatial coding method may be used. In the spatial coding method, light and dark patterns are projected onto an object while being switched in a predetermined order, and changes in light and dark are recorded as a code. For example, a portion changed in the order of "light, dark, and light" corresponds to "101", and a portion changed in the order of "light, light, and dark" corresponds to "110" or the like. Thus, if the object has a predetermined shape (for example, a flat surface), by analyzing the difference between the coordinates corresponding to "101" and the coordinates corresponding to "101" in the captured image, the three-dimensional shape of the object can be estimated. Further, by projecting a sufficiently long pattern so that changes in light and dark projection patterns do not coincide with each other, it is possible to uniquely set coordinates corresponding to each code. Since various techniques are known for the procedure of the spatial coding method, detailed description thereof is omitted in the present embodiment. Accurate calibration can be performed by using an object that has a known three-dimensional shape, such as board 820 in the embodiment described above, and that allows for inference as to which part of each three-dimensional shape is being observed by the marks. Specifically, the marks allow one to infer which part of the three-dimensional shape is being observed by each sensor, and the deviation between the observation results inferred by the spatial encoding method and the actual observation results can be inferred. The calibration of each sensor can be performed by calculating a correction parameter for correcting the deviation. As described in the above embodiments, the board 820 may be an object having another shape. That is, other shapes such as cube and rectangular parallelepiped may be used as long as the shape of the surface to which the marked is attached can be recorded. When calibration is performed only in the direction along the surface of the transport conveyor 302, the inclined surface 822 may be omitted.

When the inclined surface 822 is provided on the board 820 or another three-dimensional shape is used instead of the board 820, the mark 823 may be provided on the inclined surface 822 or a side surface of the three-dimensional shape so that the projector 105 can project and each sensor can observe. In this way, the projector 105 can project a light and dark pattern onto a place where the mark 823 exists, and each sensor can observe the mark 823 onto which the light and dark pattern is projected, so that the calibration in the height direction can be performed with high accuracy.

In the above-described embodiment, the completion of the preparation for calibration is confirmed by the input of the installation worker. Alternatively, the information processing device 104 may automatically determine the completion of the preparation for calibration. For example, the information processing device 104 may automatically determine that the preparation for calibration is completed when the first index 911 is equal to or greater than the first threshold 912 and the second index 921 is equal to or greater than the second threshold 922. In this case, in order to prevent the installation worker from further moving the board 820, the information processing device 104 may notify the installation worker of the completion of the preparation for calibration by voice or an image. In this case, the information processing device 104 may receive an instruction indicating whether to resume the calibration from the installation worker. This is because the accuracy of the correction parameter may be further improved by changing the position of the board 820.

In the above-described embodiment, the calibration related to the positions of the infrared camera 106 and the imaging camera 107 is performed. Alternatively, the present embodiment may be applied to calibration related to the positions of cameras of the same type, that is, the infrared cameras or the imaging cameras.

It is also possible to implement a process in which programs and applications for implementing the functions of the one or more embodiments described above are supplied to a system or device using a network, storage medium, or the like, and are read and executed by one or more processors in a computer of the system or device.

The process may be implemented by a circuit (for example, application specific integrated circuit (ASIC) or field programmable gate array (FPGA)) that implements one or more functions.

### (Summary of Present Disclosure)

The content of the present disclosure can be expressed as follows.

### [Expression 1]

An information processing device (104, 200) according to the present disclosure is an information processing device that performs calibration related to a position of an imaging camera 107 that captures a captured image used for detection of a parcel 300 being transported and a position of an infrared camera 106 that captures an infrared image used for detection of the parcel 300, the information processing device including a processor 201 and a memory 202. The processor 201 is configured to: acquire, from the imaging camera 107, the captured image obtained by imaging a board 820 having a plurality of marks 823; acquire, from the infrared camera 106, the infrared image obtained by imaging the board 820; detect the marks 823 from the captured image, and calculate a first index 911 related to calibration of the captured image based on the number of the detected marks 823; detect the marks 823 from the infrared image, and calculate a second index 921 related to calibration of the infrared image based on the number of the detected marks 823; and output information indicating the first index 911 and the second index 921.

Accordingly, the installation worker who performs the calibration can place the board 820 at a position where the accuracy of the correction parameter related to the captured image and the correction parameter related to the infrared image is sufficient based on the output first index 911 and second index 921. That is, the work efficiency of the calibration is improved.

### [Expression 2]

In the information processing device according to Expression 1, the processor 201 may be configured to set a predetermined first threshold 912 to be compared with the first index 911 and a predetermined second threshold 922 to be compared with the second index 921, and output a first index image 910 indicating whether the first index 911 is equal to or greater than the first threshold 912 and a second index image 920 indicating whether the second index 921 is equal to or greater than the second threshold 922.

Accordingly, the installation worker can view the first index image 910 and the second index image 920 to recognize at a glance whether the first index 911 is equal to or greater than the first threshold 912 and the second index 921 is equal to or greater than the second threshold 922 at the arrangement position of the board 820. Accordingly, the installation worker can more easily place the board 820 at a position where the accuracy of the correction parameter related to the captured image and the correction parameter related to the infrared image is sufficient.

### [Expression 3]

In the information processing device according to Expression 1, the processor 201 may be configured to output, when the first index 911 is equal to or greater than the first threshold 912 and the second index 921 is equal to or greater than the second threshold 922, an image different from an image output when the first index 911 is less than the first threshold 912 or when the second index 921 is less than the second threshold 922.

Accordingly, the installation worker can recognize at a glance from the output image whether the first index 911 is equal to or greater than the first threshold 912 and the second index 921 is equal to or greater than the second threshold 922.

### [Expression 4]

In the information processing device according to Expression 2 or 3, the processor 201 may be configured to set the first threshold 912 such that the first index 911 falls below the first threshold 912 when the number of the marks 823 detected from the captured image is less than a predetermined number, and set the second threshold 922 such that the second index 921 falls below the second threshold 922 when the number of the marks 823 detected from the infrared image is less than a predetermined number.

Accordingly, when the first index 911 is lower than the first threshold 912 or when the second index 921 is lower than the second threshold 922, the installation worker can recognize that the number of detected marks 823 is less than the predetermined number and the accuracy of the correction parameter is insufficient.

### [Expression 5]

In the information processing device according to any one of Expressions 1 to 4, the board 820 has a flat surface 821 along a surface on which the parcel is transported and an inclined surface 822 extending from one side of the flat surface 821 while inclining in a height direction, and the processor 201 may be configured to calculate the first index 911 based on the number of the marks 823 detected from the flat surface 821 in the captured image and the number of the marks 823 detected from the inclined surface 822 in the captured image, and calculate the second index 921 based on the number of the marks 823 detected from the flat surface 821 in the infrared image and the number of the marks 823 detected from the inclined surface 822 in the captured image.

Accordingly, the first index 911 or the second index 921 is calculated based on the number of marks 823 detected from the flat surface 821 and the inclined surface 822, respectively, and thus it is possible to more accurately represent whether or not the accuracy of the correction parameter is sufficient.

### [Expression 6]

In the information processing device according to Expression 1, the parcel is a parcel onto which a projection image is projected from a projection device (for example, the projector 105), and the processor 201 may project a range in which the projection device is able to project a projection image as a range in which the board 820 is to be installed.

Accordingly, the installation worker can easily place the board 820 within a range where the projection image can be projected.

### [Expression 7]

In the information processing device according to Expression 1, the parcel is a parcel onto which a projection image is projected from a projection device (for example, the projector 105), the projection device projects a predetermined image onto the board 820, and the processor 201 may be configured to calculate a correction parameter used for calibration between the projection device and the imaging camera 107 based on the captured image of the board 820 onto which the predetermined image is projected, and calculate a correction parameter used for calibration between the projection device and the infrared camera 106 based on the infrared image of the board 820 onto which the predetermined image is projected.

Accordingly, it is possible to calculate the correction parameter used for calibration between the projection device and the imaging camera 107 and the correction parameter used for calibration between the projection device and the infrared camera 106.

### [Expression 8]

A parcel sorting system 100 according to the present disclosure includes: a projection device (for example, the projector 105) configured to project a projection image onto a parcel 300 being transported; an imaging camera 107 configured to capture a captured image used for detecting the parcel 300; an infrared camera 106 configured to capture an infrared image used for detecting the parcel 300; and an information processing device (for example, the sorting client 104) configured to control the projection device, the imaging camera 107, and the infrared camera 106. In calibration related to a position of the imaging camera 107 and a position of the infrared camera 106, the information processing device is configured to: acquire, from the imaging camera 107, the captured image obtained by imaging a board 820 having a plurality of marks 823; acquire, from the infrared camera 106, the infrared image obtained by imaging the board 820; detect the marks 823 from the captured image, and calculate a first index 911 related to calibration of the captured image based on the number of the detected marks 823; detect the marks 823 from the infrared image, and calculate a second index 921 related to calibration of the infrared image based on the number of the detected marks 823; and output information indicating the first index 911 and the second index 921.

Accordingly, the installation worker who performs the calibration can place the board 820 at a position where the accuracy of the correction parameter related to the captured image and the correction parameter related to the infrared image is sufficient based on the output first index 911 and second index 921. That is, the work efficiency of the calibration is improved.

### [Expression 9]

In a calibration method according to the present disclosure, an information processing device (for example, the sorting client 104) performs calibration related to a position of an imaging camera 107 that captures a captured image used for detection of a parcel 300 being transported and a position of an infrared camera 106 that captures an infrared image used for detection of the parcel 300. The calibration method includes: placing a board 820 having a plurality of marks 823 by an installation worker; acquiring, from the imaging camera 107, the captured image obtained by imaging the board 820; acquiring, from the infrared camera 106, the infrared image obtained by imaging the board 820; detecting the marks 823 from the captured image, and calculating a first index 911 related to calibration of the captured image based on the number of the detected marks 823; detecting the marks 823 from the infrared image, and calculating a second index 921 related to calibration of the infrared image based on the number of the detected marks 823; and displaying information indicating the first index 911 and the second index 921.

Accordingly, the installation worker who performs the calibration can place the board 820 at a position where the accuracy of the correction parameter related to the captured image and the correction parameter related to the infrared image is sufficient based on the output first index 911 and second index 921. That is, the work efficiency of the calibration is improved.

Although various embodiments have been described above with reference to the drawings, it is needless to say that the present disclosure is not limited to such examples. It is apparent to those skilled in the art that various modifications, corrections, substitutions, additions, deletions, and equivalents can be conceived within the scope described in the claims, and it is understood that such modifications, corrections, substitutions, additions, deletions, and equivalents also fall within the technical scope of the present disclosure. In addition, the components in the various embodiments described above may be combined freely in a range without deviating from the spirit of the invention.

The present application is based on Japanese Patent Application No. 2022-050417 filed on March 25, 2022, and the contents thereof are incorporated herein by reference.

### INDUSTRIAL APPLICABILITY

The present disclosure is useful for improving work efficiency related to parcel sorting.

### REFERENCE SIGNS LIST

100: parcel sorting system
101: sorting management server
102: link server
103: label reader
104: sorting client
105: projector
106: distance sensor (infrared camera)
107: image sensor (imaging camera)
110: client system
300: parcel
301: label
302: transport conveyor
820: board
821: flat surface
822: inclined surface
823: mark
900: display device
910: first index image
911: first index
912: first threshold
920: second index image
921: second index
922: second threshold

## Claims

1. An information processing device that performs calibration related to a position of an imaging camera that captures a captured image used for detection of a parcel being transported and a position of an infrared camera that captures an infrared image used for detection of the parcel, the information processing device comprising:
a processor; and
a memory,
wherein the processor is configured to
acquire, from the imaging camera, the captured image obtained by imaging a board having a plurality of marks,
acquire, from the infrared camera, the infrared image obtained by imaging the board,
detect the marks from the captured image, and calculate a first index related to calibration of the captured image based on the number of the detected marks,
detect the marks from the infrared image, and calculate a second index related to calibration of the infrared image based on the number of the detected marks, and
output information indicating the first index and the second index.

2. The information processing device according to claim 1,
wherein the processor is configured to
set a predetermined first threshold to be compared with the first index and a predetermined second threshold to be compared with the second index, and
output a first index image indicating whether the first index is equal to or greater than the first threshold and a second index image indicating whether the second index is equal to or greater than the second threshold.

3. The information processing device according to claim 2,
wherein the processor is configured to
output, when the first index is equal to or greater than the first threshold and the second index is equal to or greater than the second threshold, an image different from an image output when the first index is less than the first threshold or when the second index is less than the second threshold.

4. The information processing device according to claim 2 or 3,
wherein the processor is configured to
set the first threshold such that the first index falls below the first threshold when the number of the marks detected from the captured image is less than a predetermined number, and
set the second threshold such that the second index falls below the second threshold when the number of the marks detected from the infrared image is less than a predetermined number.

5. The information processing device according to any one of claims 1 to 4,
wherein the board has a flat surface along a surface on which the parcel is transported and an inclined surface extending from one side of the flat surface while inclining in a height direction, and
wherein the processor is configured to
calculate the first index based on the number of the marks detected from the flat surface in the captured image and the number of the marks detected from the inclined surface in the captured image, and
calculate the second index based on the number of the marks detected from the flat surface in the infrared image and the number of the marks detected from the inclined surface in the infrared image.

6. The information processing device according to claim 1,
wherein the parcel is a parcel onto which a projection image is projected from a projection device, and
wherein the processor projects a range in which the projection device is able to project a projection image as a range in which the board is to be installed.

7. The information processing device according to claim 1,
wherein the parcel is a parcel onto which a projection image is projected from a projection device,
wherein the projection device projects a predetermined image onto the board, and
wherein the processor is configured to
calculate a correction parameter used for calibration between the projection device and the imaging camera based on the captured image of the board onto which the predetermined image is projected, and
calculate a correction parameter used for calibration between the projection device and the infrared camera based on the infrared image of the board onto which the predetermined image is projected.

8. A parcel detection system comprising:
a projection device that projects a projection image onto a parcel being transported;
an imaging camera that captures a captured image used for detecting the parcel;
an infrared camera that captures an infrared image used for detecting the parcel; and
an information processing device that controls the projection device, the imaging camera, and the infrared camera,
wherein in calibration related to a position of the imaging camera and a position of the infrared camera, the information processing device is configured to
acquire, from the imaging camera, the captured image obtained by imaging a board having a plurality of marks,
acquire, from the infrared camera, the infrared image obtained by imaging the board,
detect the marks from the captured image, and calculate a first index related to calibration of the captured image based on the number of the detected marks,
detect the marks from the infrared image, and calculate a second index related to calibration of the infrared image based on the number of the detected marks, and
output information indicating the first index and the second index.

9. A calibration method in which an information processing device performs calibration related to a position of an imaging camera that captures a captured image used for detection of a parcel being transported and a position of an infrared camera that captures an infrared image used for detection of the parcel, the calibration method comprising:
placing a board having a plurality of marks by an installation worker;
acquiring, from the imaging camera, the captured image obtained by imaging the board;
acquiring, from the infrared camera, the infrared image obtained by imaging the board;
detecting the marks from the captured image, and calculating a first index related to calibration of the captured image based on the number of the detected marks;
detecting the marks from the infrared image, and calculating a second index related to calibration of the infrared image based on the number of the detected marks; and
displaying information indicating the first index and the second index.
